# EUROPÄISCHE PATENTSCHRIFT

(11) **EP 1 736 801 B1**
(45) Veröffentlichungstag und Bekanntmachung des Hinweises auf die Patenterteilung: **07.01.2009**
(21) Anmeldenummer: 06012924.4
(22) Anmeldetag: 23.06.2006
(51) Int. Cl.: G01V 8/10, A01M 31/00

(54) **Einrichtung zum Feststellen und Auffinden von sich in Wiesen aufhaltenden Tieren**
Device for locating and observing animals on meadows
Dispositif destiné à la détection et à la localisation d'animaux se trouvant dans des prairies

(30) Priorität: 24.06.2005 DE 102005029732
(43) Veröffentlichungstag der Anmeldung: 27.12.2006
(73) Patentinhaber: Deutsches Zentrum für Luft- und Raumfahrt e.V., 51147 Köln (DE)
(72) Erfinder: Tank, Volker, Dr., 82279 Eching (DE)
(74) Vertreter: von Kirschbaum, Albrecht

(56) Entgegenhaltungen:
- JP-A- 11 258 325
- US-A- 5 872 516
- US-B1- 6 653 971
- LIND N M ET AL: "Validation of a digital video tracking system for recording pig locomotor behaviour" JOURNAL OF NEUROSCIENCE METHODS, ELSEVIER SCIENCE PUBLISHER B.V., AMSTERDAM, NL, Bd. 143, Nr. 2, 30. April 2005 (2005-04-30), Seiten 123-132, XP004825291 ISSN: 0165-0270

## Beschreibung

Die Erfindung betrifft eine Einrichtung zum Feststellen und Auffinden von sich in Wiesen aufhaltenden Tieren, wie Rehe, Rehkitze, Hasen.

Auf Grund der technischen Entwicklung im Acker- und Pflanzenbau der Landwirtschaft werden weltweit stetig zunehmende Arbeitsbreiten und -geschwindigkeiten gefordert. Grasmähmaschinen haben derzeit eine Arbeitsbreite von bis zu 8 m; in der nächsten Generation werden es bis zu 14 m sein. Insbesondere die Grasmahd zur Heu- und Silage-Bereitung stellt damit eine rasant wachsende Gefährdung für die gesamte Tierwelt in den Wiesen dar, da sie zeitgleich mit abgelegten Jungtieren, wie Rehe, Rehkitze, Hasen, Junghasen, Bodenbrüter, stattfindet; die Jungtiere jedoch bei Gefahr nicht fliehen, sondern regungslos verharren. Die schnellen Mähwerke großer Breite stellen aber auch eine Gefahr für ausgewachsene Tiere, wie Hasen und Rehe, dar, da diese häufig zu spät und in falscher Richtung fliehen, außerdem im hohen Gras stark behindert sind.

Die Suche nach gefährdetem Wild, beispielsweise durch Abgehen der Äcker, auch mit Hunden, vor der Mahd, ist äußerst personal- und zeitaufwändig. Sie lässt sich daher nur in Einzelfällen durchführen und ist als breit angelegte Schutz- und Rettungsmaßnahme ungeeignet.

Das Auffinden von Tieren mittels Video- oder Satellitenüberwachung ist bekannt aus Lind et al.: "Validation of a digital video tracking system for recording pig locomotor behaviour", J. of Neuroscience Methods and from JP 11 258 325.

Es existiert bereits ein Infrarot-Wildretter, der mit großer Suchbreite die Suche zu Fuß erleichtert. Bei sehr großen Wiesenflächen ist auch mit diesem Gerät sowohl ein hoher personeller Aufwand als auch ein großer zeitlicher Aufwand notwendig, was als nachteilig anzusehen ist.

Moderne Sucheinrichtungen auf der Basis von optischen Sensoren im infraroten und sichtbaren Spektralbereich, von abbildenden Mikrowellen-Sensoren u.ä. sind bisher nicht so weit entwickelt, dass sie bei Mähgeräten verwendet werden können. Als weiterer Nachteil wird darüber hinaus auch angesehen, dass die Verwendung vorgenannter technischer Systeme direkt in Verbindung mit modernen und zukünftigen Mähmaschinen bei den großen Arbeitsbreiten und -geschwindigkeiten aller Wahrscheinlichkeit nach nicht praktikabel sein wird, da die Detektion weit vor der aktuellen (Mäh-) Position erfolgen muss, um wirksame Schutzmaßnahmen rechtzeitig einleiten zu können, beispielsweise Anhalten der Maschine.

Wegen der großen Arbeitsbreiten ist eine mit der Mähmaschine gekoppelte Sucheinrichtung, die den nächsten Mähstreifen absucht, technisch nur mit enormem Aufwand zu realisieren, allein schon wegen der durch Mähen und gleichzeitigem Suchen erforderlichen doppelten Arbeitsbreite. Die Suche könnte mit einem zweiten, unabhängigen Fahrzeug vor der Mahd erfolgen, was technisch praktikabel wäre, aber einen großen Aufwand erfordern würde.

Aufgabe der Erfindung ist es daher, bei der Bearbeitung von Wiesen, insbesondere bei der Wiesenmahd, mittels Maschinen mit großen Arbeitsbreiten und hohen Arbeitsgeschwindigkeiten, Verluste an wildlebenden Tieren, deren Nachwuchs und Brut weitestgehend zu vermeiden, ohne dass dadurch weder die Qualität der Bearbeitung gemindert wird noch der Aufwand an Bearbeitungszeit und Personal unverhältnismäßig ansteigt.

Diese Aufgabe ist gemäß der Erfindung bei einer Einrichtung zum Feststellen und Auffinden von sich in Wiesen aufhaltenden Tieren mit den Merkmalen im kennzeichnenden Teil des Anspruchs 1 gelöst. Vorteilhafte Weiterbildungen sind Gegenstand von auf den Anspruch 1 unmittelbar oder mittelbar rückbezogenen Ansprüchen.

Mit der erfindungsgemäßen Einrichtung ist es rechtzeitig zum Mähtermin und unabhängig vom Mähvorgang möglich, festzustellen, ob sich gefährdete Tiere in der zu bearbeitenden landwirtschaftlichen Fläche befinden und, wenn ja, an welcher Stelle sie sich aufhalten. Mit dieser Kenntnis können Tiere unmittelbar vor der Mahd aus dem Gefahrenbereich entfernt werden. Handelt es sich um erwachsene Tiere, so werden sie vertrieben, während Jungtiere ohne Fluchtinstinkt bis zum Abschluss der Mahd in Gewahrsam genommen werden.

Gemäß der Erfindung werden zu bearbeitende Wiesenflächen mittels einer an deren Rändern installierten Sensoranordnung, die eine Anzahl außerhalb einer zu bearbeitenden Wiesenfläche ortsfest angeordneter Sensoreinheiten aufweist, deren geographische Koordinaten mit Hilfe von Differentiellem Global Monitoring eines DGPM-Systems oder des Galileo-Systems festgelegt sind und als geographisches Bezugssystem dienen, über einen längeren Zeitraum von mindestens einigen Tagen vor der Bearbeitung zeitlich und räumlich lückenlos von den Tieren zurückgelegte Wege sowie deren Aufenthaltsorte aufgenommen und mit Hilfe des DGPM- oder Galileo-Systems georeferenziert in einem Rechner gespeichert. Gemäß der Erfindung wird in dem Rechner eine automatische Online-Auswertungsanalyse der erhaltenen Daten durchgeführt, die jeweils aktuellen Aufenthaltsorte der Tiere werden bestimmt und die Tierart wird differenziert. Ferner ist gemäß der Erfindung mindestens ein tragbares Navigationsgerät vorgesehen, an welches die aktuellen Aufenthaltsorte der Tiere in der Wiese, gegebenenfalls mit Angabe der Tierart, übertragen und in dessen Display angezeigt werden.

Hierbei sind die Sensoreinheiten optische Sensoren im infraroten und/oder optischen Spektralbereich, Mikrowellen-Sensoren, akustische Sensoren, Nachtsichtgeräte und/oder Radargeräte. Ferner können die Sensoreinheiten eine Kombination dieser Sensoren und Geräte sein.

Ferner können auch richtungssensitive Lichtschranken und zusätzlich akustische Sensorsysteme in Form von Mikrophonen/Richtmikrophonen oder eine Kombination aus mehreren der vorstehend angeführten Sensoren und Geräte bestehen.

Mit Hilfe der erfindungsgemäßen Einrichtung kann die Verhaltensweise der verschiedenen beobachteten Tiere festgestellt werden; d.h. beispielsweise kann festgestellt werden, ob sie sich schnell oder langsam bewegen, ob sie sich äsend bewegen, ob sie vertraut oder unruhig sind, ob sie viel sichern, ob sie eine bestimmte Stelle aufsuchen und dort länger verweilen, ob sie in der Fläche ruhen, etc.. Durch eine akustische Überwachung kann festgestellt werden, ob die Tiere Lautäußerungen von sich geben und welcher Art diese sind (beispielsweise Lockrufe von Rehkitz und -geiß). Die Korrelation zeitgleicher akustischer und optischer Beobachtungsdaten erleichtert das Feststellen und Lokalisieren von Jungtieren.

Eine bei der erfindungsgemäßen Einrichtung verwendete Sensoranordnung ist so ausgelegt und entlang der landwirtschaftlichen Fläche ortsfest installiert, d.h. ortsfest aufgebaut oder mobil und ortsfest verankert, dass ein Feststellen und Speichern der geographischen Koordinaten, d.h. eine Georeferenzierung der Bewegungen und des Aufenthalts der Tiere in der Fläche möglich ist.

Zum Aufsuchen der Fundorte ist zur Rettung der Tiere eingesetztes Personal erfindungsgemäß mit einem mobilen Navigationsgerät ausgestattet. Das mobile Navigationsgerät übernimmt über eine geeignete Schnittstelle die ermittelten Bewegungsdaten und Fundstellen vom Rechner und verfügt über Auswerteverfahren und Einrichtungen, um das Personal zu den Fundstellen zu führen.

Wie bereits ausgeführt, erfolgt dies möglichst kurz vor der Mahd, jedoch früh genug, um die abschließenden Auffind- und eigentlichen Rettungsmaßnahmen ohne Behinderung der Mahd durchführen zu können. Während dieser letzten Phase werden weitere Beobachtungen durchgeführt; eventuell beobachtete Tierbewegungen werden unmittelbar an die vom Personal mitgeführten Navigationsgeräte übertragen. Die Koordinaten der Fundstelle werden aktualisiert und so dem Personal in unübersehbarer Weise, vorzugsweise auf dem jeweiligen Navigationsgerät-Display, zur Kenntnis gebracht. Natürlich werden dabei auch die Bewegungen des zur Rettung der Tiere eingesetzten Personals erfasst, die jedoch als solche erkannt und entsprechend behandelt werden.

Zur Montage der Sensoreinheiten sind im Randbereich oder in den landwirtschaftlichen Flächen ortsfeste, d.h. entweder ortsfest aufgebaute oder mobile und ortsfest verankerbare Tragkonstruktionen, wie Masten, Gerüste oder Türme vorgesehen, an denen in den örtlichen Gegebenheiten angepasster Höhe über der zu bearbeitenden Wiesenfläche die Sensoreinheiten befestigt sind.

Zur exemplarischen Vereinfachung der nachfolgenden Ausführungen wird eine quadratische Wiese angenommen. Außerhalb des Wiesenquadrats sind in der Nähe jeder der vier Ecken Sensoreinheiten einer Sensoranordnung installiert, welche einen Gesichtsfeldwinkel von mindestens 45° haben. Die Sensoreinheiten sind an den Tragkonstruktionen, wie Masten, Gerüsten oder Türmen, montiert und so ausgerichtet, dass sie jeweils einen Wiesenrand und eines der durch angenommene Diagonalen des Wiesenquadrats gebildeten (dreieckigen) Wiesensegmente erfassen, die jeweils der Fläche einer Wiesenhälfte entsprechen. Somit wird jeder Teil der Wiese von zwei Sensoreinheiten aus unterschiedlichen Blickrichtungen beobachtet.

Für die Wiesenränder gilt, dass jeweils eine Sensoreinheit parallel zum Übergang von der Umgebung zur Wiese ausgerichtet ist ("blickt") und damit alle von außerhalb in die Wiese gehenden und alle die Wiese nach außen verlassenden Tiere erfasst. Die zweite Sensoreinheit mit einer anderen Ausrichtung blickt über die Wiese hinweg auf diesen Übergang und verfügt über eine unverstellte Sichtlinie zu Tieren in dem Übergangsbereich nur dann, wenn das Gesichtsfeld nicht durch Gras abgeschirmt ist, beispielsweise bei größeren oder weiter entfernten Tieren.

Tiere innerhalb der Wiese werden mit den vorstehend aufgeführten Einrichtungen, wie beispielsweise Kamerasystemen im sichtbaren und/oder infraroten Spektralbereich, Nachtsichtgeräten, direkt erkannt, wenn Körperteile über das Gras hinausragen, oder der Körper groß genug ist, um Grashalme an der Oberfläche auseinanderzudrücken, so dass Körperteile sichtbar werden. Kleinere Tiere können indirekt erkannt werden, wenn sie sich bewegen und dabei auch die Grashalme an der Oberfläche bewegt werden. Mikrowellensysteme, insbesondere aktive, wie Radargeräte, in entsprechenden Frequenzbereichen sind in der Lage auch Tiere zu erfassen, zu denen die direkte Sicht durch Gras verstellt ist.

Zusätzlich können an den Tragkonstruktionen, wie Masten, Gerüsten oder Türmen richtungssensitive Lichtschranken angebracht werden, dergestalt, dass von diesen jeweils der Wiesenrand zwischen zwei Tragkonstruktionen überwacht wird. Hiermit werden zusätzlich Ein- und Austritte erfasst. Darüber hinaus können mehrere Lichtschranken in verschiedenen Höhen über dem Wiesenboden angebracht werden, wodurch eine Erkennung der Körperhöhe der hindurch tretenden Tiere und damit eine grobe Klassifizierung der Tierart ermöglicht wird.

Zur Überbrückung größerer Strecken mittels Lichtschranken ist stark gebündelte Strahlung erforderlich, wenn Information über die Tiergröße gewonnen werden soll. Zu diesem Zweck werden als Strahlungsquellen Laser oder Laserdioden in den Lichtschranken verwendet. Richtungssensitiv werden Lichtschranken beispielsweise dadurch, dass zwei oder mehrere Schranken in der zu überwachenden Richtung hintereinander aufgebaut sind, wobei die Abstände der Körpergröße der zu erfassenden Tierart angepasst sind. Aus der zeitlichen Aufeinanderfolge der Lichtschrankenunterbrechungen lässt sich die Bewegungsrichtung ermitteln.

Die geographischen Standorte der ortsfesten Sensoreinheiten entlang des Geländes und in Bezug zueinander werden mit hoher Genauigkeit, beispielsweise mit Hilfe von Differentiellem Global Monitoring, eines DGPM-Systems, dem zukünftigen Galileo-System, auf wenige Zentimeter genau vermessen und bestimmt sowie in einem Computer gespeichert. Das gilt in gleicher Weise für die Blickrichtung der Sensoreinheiten. Die geographischen Standorte sind als geographisches Bezugssystem für ein tragbares Navigationsgerät des zur Rettung der Tiere eingesetzten Personals vorgesehen.

Auswerteprogramme verfügen damit über die notwendige Information, um eine räumliche Korrelation der Messdaten, beispielsweise Bildpunkte der Kamerasysteme, aller vier Sensoreinheiten vorzunehmen. Damit wird eine genaue Triangulation detektierter Tiere und ihrer Bewegungen vorgenommen. Alternativ und mit geringerem Aufwand ist es auch möglich, die räumliche Zuordnung aus den Abbildungseigenschaften der Sensoreinheiten abzuleiten.

Die Sensoranordnung wird bereits mehrere Tage vor der Mahd oder beispielsweise kurz vor Beginn der Setzzeit von Rehkitzen aufgestellt und misst kontinuierlich Tag und Nacht. Alle Ereignisse, wie Tierdetektion und -bewegungen, werden erfasst, die Bewegungskoordinaten und die Bewegungscharakteristika werden aus den Messdaten ermittelt und gespeichert. Die Speicherung kann beispielsweise in Form thematischer Karten erfolgen, welche die Koordinaten des Geländes und diejenigen der Fundorte enthalten.

Alle Ereignisse werden im zeitlichen Verlauf hinsichtlich Ähnlichkeit ihrer Merkmale, wie Tiergröße, Tierart, Wiederholrate, Bewegungsmuster, Aufenthaltsdauer, Verweilort, Verweilzeiten, Lautäußerungen, mit Verfahren der Bildverarbeitung und Mustererkennung, wie beispielsweise des "Change Detection" analysiert. "Change Detection" - Verfahren stellen Veränderungen in einer Szene fest, die im Zeitraum zwischen zwei zeitlich auseinander liegenden Beobachtungen dieser Szene stattgefunden haben, indem über Vergleiche nach Unterschieden in den beiden Beobachtungen gesucht wird. Die Beobachtungen liegen als Aufzeichnungen vor, beispielsweise in Form von Bildern.

Auf Basis dieser Analysen wird festgestellt, ob Jungtiere vorhanden sind und wo deren Lagerplätze sind. Aus der Analyse aller Bewegungen und sonstiger Informationen, wie Größe, gegebenenfalls Geschlecht, beispielsweise anhand des Gehörns von Rehböcken, wird abgeleitet, ob erwachsene Tiere vorhanden sind und wo diese sich jeweils befinden. Die Ergebniskoordinaten werden gespeichert.

Tragbare Navigationsgeräte des zur Rettung der Tiere eingesetzten Personals übernehmen die Koordinaten der Bewegungen und/oder der aktuellen Standorte von Tieren. Mittels eines Displays und kontinuierlicher Positionsbestimmung führt das Navigationsgerät das zur Rettung der Tiere eingesetzte Personal entlang der festgestellten Bewegungen der Tiere oder auf direktem Wege zu einem ermittelten Standort. Die Führung entlang der Bewegungskoordinaten kann dazu beitragen, Jungtiere zu finden, die bei der automatischen Analyse nicht identifiziert wurden.

Rehkitze und Junghasen werden von den Muttertieren zum Säugen aufgesucht und dabei auch umgelagert: Folgt man also dem Weg, den die Mutter genommen hatte, wird man das Jungtier finden. Die Führung mittels des Navigationsgeräts kann dabei auch auf umgekehrtem Weg erfolgen, d. h. beginnend mit dem Austritt aus der Wiese. Dabei wird davon ausgegangen, dass beispielsweise eine Rehgeiß die Wiese nach dem Säugen und Umlagern des Kitzes auf direktem Wege verlässt. Das System ist natürlich auch in der Lage, festzustellen, um welche Tierarten es sich handelt und dass sich gegebenenfalls keine Tiere einer bestimmten Art in der Wiese aufhalten.

Kamerasysteme im sichtbaren und infraroten Spektralbereich haben eine sichere Sichtverbindung zu den Tieren, solange diese nicht von hohem Gras verdeckt sind, d. h. beim Ein- und Austritt. Die Tiere werden bei diesen Ereignissen sicher erkannt. Nach dem Eintritt werden die Bewegungen der vom Gras verdeckten Tiere anhand der durch sie verursachten Bewegungen des Grases detektiert, beobachtet und verfolgt.

Nachfolgend werden exemplarisch Geräte aufgelistet, die in den bei der erfindungsgemäßen Einrichtung verwendbaren Sensoranordnungen zum Einsatz kommen können. Es handelt sich dabei sowohl um passive als auch aktive Fernerkundungsgeräte:
- Schwarzweiß- oder Farbvideokameras im sichtbaren Spektralbereich, vorzugsweise Matrixkameras
- Low Light Level TV Kameras, gegebenenfalls mit zusätzlicher Beleuchtung der Szene
- Nachtsichtgeräte mit Restlichtverstärkern, Photomultipliern, gegebenenfalls mit zusätzlicher Beleuchtung der Szene
- Infrarotkameras, vorzugsweise im thermischen Infrarot (8 bis 14 µm Wellenlänge)
- Radargeräte und Mikrowellensensoren in verschiedenen Frequenzbereichen
- Tonaufnahmegeräte mit Mikrofonen/Richtmikrofonen
- Rotierende Zeilenkameras (Zeilenabtaster) oder Videopanorama-Kameras im sichtbaren und infraroten Spektralbereich und in Form von Low Light Level TV Kameras

Nachfolgend wird die Erfindung anhand der Zeichnungen näher erläutert. Es zeigen:
- Fig.1: eine schematische Zeichnung einer Sensoreinheit mit mehreren Sensoren;
- Fig.2: eine schematische Darstellung einer Sensoranordnung mit mehreren Sensoreinheiten außerhalb einer Wiese;
- Fig.3: eine schematische Darstellung einer Sensoranordnung mit Sensoren oder einem Aufnahmegerät als rotierende Einrichtung, und
- Fig.4: eine schematische Darstellung einer Anordnung nach Fig.3 in einer Wiese.

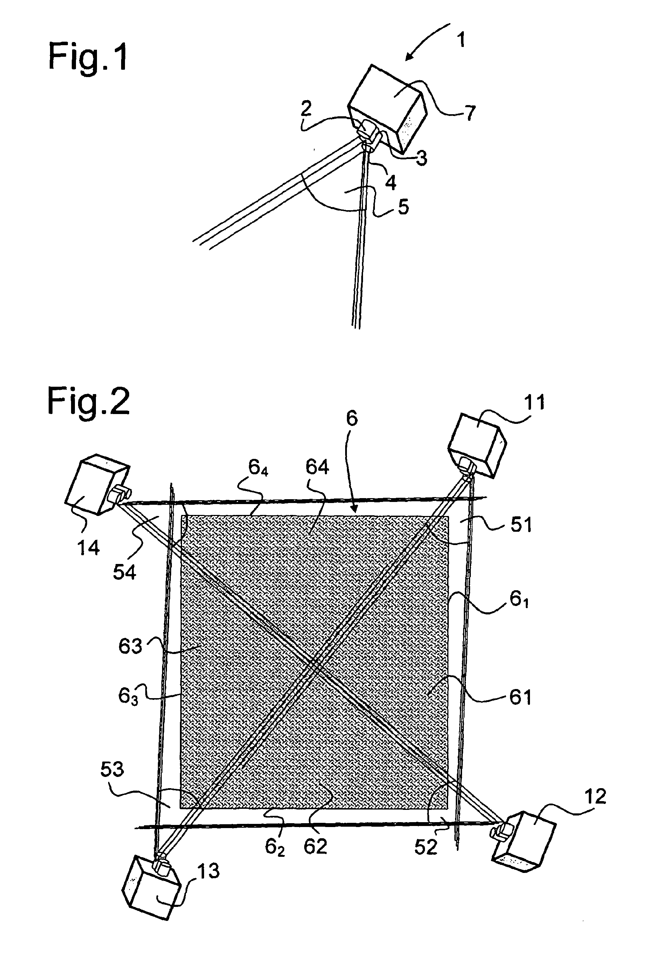

In Fig.1 ist schematisch ein Gehäuse 7 einer Sensoreinheit 1 dargestellt, wobei drei Aperturen 2 bis 4 von drei in dem Gehäuse 7 untergebrachten Sensoren bzw. Geräten zu erkennen sind, welche Gesichtsfeldwinkel 5 einheitlicher Größe von mindestens 45° haben.

Fig.2 zeigt in Draufsicht eine Wiese 6, an deren im Bereich der vier Ecken jeweils der Sensoreinheit 1 in Fig.1 entsprechende Sensoreinheiten 11, 12, 13, 14 vorgesehen sind, wobei zur Vereinfachung der Darstellung Tragkonstruktionen zur Montage und Halterung der Sensoreinheiten 11 bis 14 weggelassen wurden. Die Sensoreinheiten 11 bis 14 sind jeweils so ausgerichtet, dass deren Gesichtsfeldwinkel 51, 52, 53, 54 Wiesensegmente der Wiese 6 und deren Wiesenränder 6₁ bis 6₄ erfassen. Die Wiese 6 ist entlang von zwei angenommenen Diagonalen durch die Gesichtsfelder 51 bis 54 der Sensoreinheiten 11 bis 14 in vier etwa gleich große Wiesensegmente 61 bis 64 unterteilt.

Dies bedeutet, dass jedes der Wiesensegmente 61 bis 64 aus zwei zueinander etwa senkrechten Richtungen erfasst wird, und zwar das Wiesensegment 61 von den Sensoreinheiten 11 und 14, das Wiesensegment 62 von den Sensoreinheiten 12 und 11, das Wiesensegment 63 von den Sensoreinheiten 13 und 12 und das Wiesensegment 64 von den Sensoreinheiten 14 und 13.

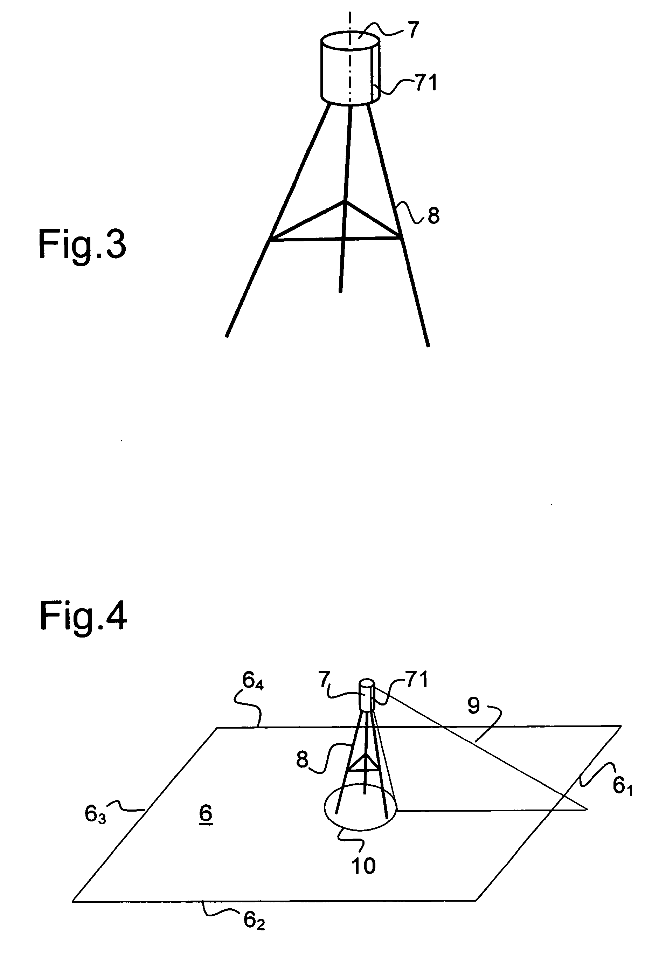

Fig.3 zeigt ein zylinderförmiges Gehäuse 7, in welchem im einzelnen nicht näher dargestellte Sensoren untergebracht und montiert sind. Das Gehäuse 7 hat eine Öffnung 71, durch welche mittels Sensoren die Umgebung beobachtet werden kann. Die Öffnung 71 hat, hier exemplarisch die Form eines rechteckigen Schlitzes in der Wand des zylindrischen Gehäuses 7. Die Öffnung 71 ist mit einem nicht dargestellten Fenster staub-, regen- und schneedicht verschlossen, das durchlässig für Strahlung in den Spektralbereichen ist, in denen die Sensoren arbeiten.

Um gegebenenfalls für breitere Spektralbereiche durchlässig zu sein, ist eine Unterteilung des Fensters in mehrere Segmente unterschiedlicher spektraler Durchlässigkeit vorgesehen; entsprechende Segmente sind dann entsprechenden Sensoren zugeordnet. Für den Bereich sichtbarer Strahlung ist Glas geeignet, für den Bereich infraroter Strahlung beispielsweise Germanium, für den Mikrowellenbereich beispielsweise Polyäthylen. Das Gehäuse 7 mit beispielsweise drei Sensoreinheiten ist auf einer Tragkonstruktion montiert, die hier schematisch in Form eines Dreibeinstativs 8 dargestellt ist.

Das Gehäuse 7 mit in ihm untergebrachten Sensoreinheiten kann um die strich-punktiert angedeutete, vertikale Achse von einem integrierten Elektromotor mit einstellbarer Geschwindigkeit in Rotation versetzt werden. Die Oberfläche des Gehäuses 7 kann mit photoelektrischen Solarzellen belegt sein, die am Tage Strom für den Betrieb der Sensoreinheiten und des Elektromotors liefern und darüber hinaus einen integrierten Akkumulator laden, der die elektrische Energie für den Betrieb in der Nacht zur Verfügung stellt.

Das Gehäuse 7 und insbesondere dessen nicht näher dargestelltes Dach können zur Montage der Solarzellen und auch zum Schutz der Öffnung 71 vor Wettereinflüssen funktional optimal gestaltet werden. Alternativ kann die elektrische Versorgung der Einrichtung auch durch Stromzuführung über Kabel erfolgen. Die vorstehend erläuterten Einrichtungen zur Stromversorgung können für alle anderen Ausführungsformen in entsprechender Weise verwendet werden.

Fig.4 zeigt schematisch die Vorrichtung nach Fig.3 im Einsatz. Die Vorrichtung ist auf der Tragkonstruktion 8 etwa in der Mitte der zu beobachteten Wiese 6 montiert. Von der Öffnung 71 des Sensorgehäuses 7 ausgehend, ist schematisch der Gesichtsfeldwinkel 9 von nicht näher dargestellten Beobachtungsgeräten/Sensoren eingezeichnet, der so gewählt ist, dass außer einem kleinen kreisförmigen Bereich 10 am Fuß der Tragkonstruktion 8 die gesamte Wiesenfläche 6 und deren Wiesenränder 6₁ bis 6₄ erfasst werden. Die geometrische Zuordnung von Objekten im Bild- und Gegenstandsraum ist über die Abbildungseigenschaften der Sensorsysteme möglich. Anstelle eines Radargeräts kann auch eine Videopanorama-Kamera für den sichtbaren und/oder infraroten Spektralbereich eingesetzt werden.

Der Bereich 10 wird indirekt überwacht, indem dieser beispielsweise unmittelbar vor einer Inbetriebnahme durch die Suche mit Hunden und/oder einem tragbaren Infrarot-Wildretter abgesucht wird und frei von Wild gemacht wird. Von diesem Zeitpunkt an wird mittels der im Gehäuse 7 untergebrachten Sensoreinheiten überwacht, ob Tiere und welche Art Tiere aus der Wiese 6 in den Bereich 10 wechseln und nicht wieder zurückkehren. Diese Information wird ebenfalls dem zur Rettung von Tieren eingesetzten Personal übergeben, welches die notwendigen Maßnahmen durchführt. Ebenso ist es möglich, durch zusätzliche Sensoreinheiten, welche an der Tragkonstruktion 8 montiert sind und nach unten in den Bereich 10 blicken, diesen direkt zu überwachen.

In einer bevorzugten Ausführungsform der Erfindung wird als Sensor ein Radargerät benutzt, welches in einem Wellenlängenbereich und einer Betriebsart arbeitet, die es erlauben, Tiere beispielsweise am Wiesenboden zu detektieren, zu denen keine Sichtverbindung besteht, die also im Gras verborgen sind. Auch das Radargerät wird kontinuierlich betrieben. Die Messdaten werden aufgezeichnet und in Form von Radar-Reflexionskarten des Geländes im Rechner gespeichert. Zeitlich beispielsweise mehrere Sekunden oder einige Zig-Sekunden aufeinander folgende Karten werden mit Hilfe der bereits angeführten "Change Detection"-Methode miteinander verglichen, wobei als Veränderungen (change) neu hinzugekommene oder sich bewegende Tiere erkannt werden.

Auf diese Weise ist es besonders leicht möglich, Jungtiere zu entdecken, die über Stunden am Boden liegen, dann vom Muttertier aufgesucht und gesäugt werden. Anschließend gehen häufig Mutter und Jungtier an eine andere Stelle in der Wiese, wo sich das Jungtier an den Boden legt und das Muttertier danach allein die Wiese verlässt. Die Veränderungen am alten und neuen Lagerort des Jungtiers werden detektiert. Ebenso lassen sich auf diese Weise die Gelege von Wiesenbrütern finden, an denen periodische Veränderungen (change) dadurch auftreten, dass sich die Altvögel beim Brüten ablösen, bzw. die Gelege kurzfristig auch ohne Altvogel sind.

Anordnungen für diese Art der Beobachtung und Erfassung können die anhand von Fig.2 und Fig.3 beschriebenen Anordnungen sein. Für die Radargeräte kommen Geräte in den Frequenzbändern L (1 - 2,6 Ghz), S (2, 6 - 3,95 Ghz), C (3,95-5,8 GHz) und X (8,2 - 12,4 GHz) zur Anwendung, die mit Wellenlängen im Bereich von etwa 2,5 cm bis ca. 30 cm das Gras durchdringen, insbesondere wenn die Strahlung horizontal in Bezug auf die senkrecht stehenden Grashalme polarisiert wird.

Die Auswahl der am besten geeigneten Frequenzbereiche berücksichtigt die Tatsache, dass für dichtes, häufig nasses Gras die niederfrequenten Bänder (L, S) geeignet sind, während für meist trockenes, weniger dichtes Gras auch höherfrequente X-Bänder verwendet werden können. Besonders geeignet sind daher Multimode Radarsysteme, die eine Umschaltung der Frequenzbereiche ermöglichen. Die Systeme werden mit Schwenkantennen zur Abtastung der Wiesen ausgerüstet.

Anordnungen mit mehreren auf Tragkonstruktionen in der Wiese verteilten Antennen zur Realisierung synthetischer Aperturen und damit zur Steigerung der geometrischen Auflösung sind vorgesehen. Auch der Frequenzbereich von 24 GHZ (Wellenlänge ca. 12,5 mm) kommt in Betracht, insbesondere auch, weil zunächst bis zum Jahre 2013 die Genehmigung der Benutzung des 24-GHz-Bands für das Kfz-Kurzstreckenradar von der EU-Kommission erteilt wurde. Darüber hinaus ist mit kürzeren Wellenlängen auch eine höhere geometrische Auflösung bei gleicher Antennengröße erreichbar. Ferner sind die Antenne und ihre Größe der Aufgabenstellung insbesondere der geforderten geometrischen Auflösung angepasst.

Zur Verbesserung des Signal-Rauschverhältnisses können mit den Radargeräten längere Integrationszeiten, d.h. längere Beobachtungszeiten jedes einzelnen Wiesensegments, realisiert werden, wodurch besonders im Gras verborgen längere Zeit lagernde Tiere (Jungtiere) und Gelege besser erkennbar werden und Veränderungen leichter zu detektieren sind.

### Bezugszeichenliste

- 1: Sensoreinheit
- 11 bis 14: Sensoreinheiten
- 2 bis 4: Aperturen
- 5: Gesichtsfeldwinkel
- 51 bis 54: Gesichtsfeldwinkel
- 6: Wiese
- 6₁ bis 6₄: Wiesenränder von 6
- 61 bis 64: Wiesensegmente
- 7: Gehäuse
- 71: Öffnung in 7
- 8: Dreibeinstativ
- 9: Gesichtsfeldwinkel
- 10: kreisförmiger Bereich

## Patentansprüche

1. Verfahren zum Feststellen und Auffinden von sich in Wiesen aufhaltenden Tieren, wie Rehe, Rehkitze, Hasen, **dadurch gekennzeichnet, dass** mittels
einer Sensoranordnung, bestehend aus einer Anzahl außerhalb einer zu bearbeitenden Wiesenfläche (6) ortsfest angeordneter Sensoreinheiten (11 bis 14), deren geographische Koordinaten mit Hilfe von Differentiellem Global Monitoring eines DGPM-Systems oder des Galileo-Systems festgelegt sind und als geographisches Bezugssystem dienen, über einen längeren Zeitraum von mindestens einigen Tagen zeitlich lückenlos von Tieren zurückgelegte Wege sowie deren Aufenthaltsorte aufgenommen und mit Hilfe des DGPM- oder Galileo-Systems georeferenziert in einer Datenverarbeitungseinrichtung gespeichert werden,
dass mittels der Datenverarbeitungseinrichtung
a) eine automatische Online-Auswertungsanalyse der erhaltenen Daten durchgeführt wird;
b) die jeweils aktuellen Aufenthaltsorte der Tiere bestimmt werden sowie
c) die Tierart differenziert wird, und
dass an mindestens ein tragbares Navigationsgerät die aktuellen Aufenthaltsorte der Tiere in der Wiese - mit Angabe der Tierart - übertragen und in dessen Display angezeigt werden.

2. Verfahren nach Anspruch 1, **dadurch gekennzeichnet, dass** die Anzahl Sensoreinheiten (11 bis 14) der Sensoranordnung etwa gleich große Gesichtsfeldwinkel (5) haben und in den örtlichen Gegebenheiten angepasster Höhe über der zu bearbeitenden Wiesenfläche (6) an Tragkonstruktionen in Gestalt von Masten, Gerüsten oder Türmen anzubringen sind.

3. Verfahren nach Anspruch 1 oder 2, **dadurch gekennzeichnet, dass** als Sensoreinheiten (11 bis 14) optische Sensoren im infraroten und/oder optischen Spektralbereich, Mikrowellen-Sensoren, akustische Sensoren, Nachtsichtgeräte, eine Videopanorama-Kamera und/oder Radargeräte sowie eine Kombination dieser Sensoren und Geräte eingesetzt werden.

4. Verfahren nach Anspruch 1, **dadurch gekennzeichnet, dass** vier ortsfeste Sensoreinheiten (11 bis 14) mit etwa gleich großen Gesichtsfeldern von mindestens 45° im Bereich der Ecken außerhalb einer zu bearbeitenden etwa rechteckigen Wiesenfläche (6) vorgesehen werden, wobei die etwa gleich großen Gesichtsfelder der Sensoreinheiten (11 bis 14) so ausgerichtet werden, dass mittels jeder der Sensoreinheiten jeweils einer der vier Ränder (6₁ bis 6₄) und mindestens die Hälfte der zu bearbeitenden Wiesenfläche (6) erfasst werden.

5. Verfahren nach Anspruch 1, **dadurch gekennzeichnet, dass** nur eine in einem Gehäuse (7) untergebrachte Sensoreinheit der Sensoranordnung auf einer etwa in der Mitte einer zu bearbeitenden Wiesenfläche (6) ortsfest angeordneten Tragkonstruktion (8) mit einstellbarer Geschwindigkeit um die vertikale Achse in Drehung versetzbar ist.

6. Verfahren nach Anspruch 5, **dadurch gekennzeichnet, dass** eine schlitzförmige Öffnung (71) im Gehäuse (7) durch ein für Strahlung in bestimmten Spektralbereichen durchlässiges Fenster verschließbar ist.

7. Verfahren nach Anspruch 6, **dadurch gekennzeichnet, dass** das Fenster in der schlitzförmigen Gehäuseöffnung (71) in Segmente unterschiedlicher Durchlässigkeit unterteilbar ist.

8. Verfahren nach einem der Ansprüche 5 bis 7, **dadurch gekennzeichnet, dass** zum Erzeugen von zum Betrieb eines im Gehäuse (7) integrierten Elektromotors und der Sensoreinheit erforderlicher Energie auf der Oberfläche des Gehäuses (7) der Sensoreinheit einschließlich der Gehäuseabdeckung Solarzellen vorgesehen werden.

## Claims

1. A method for detecting and locating animals on meadows, such as deer, rawns, hares, **characterized in**
**that**, for a longer period of at least several days, paths travelled by animals and their whereabouts are captured continuously and stored in a data processing means in a manner geo-referenced with the use of a DPGM or Galileo system, the capturing being effected with a sensor arrangement comprising a number of stationary sensor units (11 to 14) located outside a meadow area to be worked on, the geographic coordinates of the sensor units being fixed using differential global monitoring by means of a DGPM system or the Galileo system and serving as a geographic reference system,
**that** by means of the data processing means
a) an automatic online evaluation analysis of the data obtained is performed;
b) the respective current whereabouts of the animals are determined, and
c) the species is differentiated, and
**that** the current whereabouts of the animals on the meadow - with specification of the species - are transmitted to at least one portable navigation device and are shown on the display thereof.

2. The method of claim 1, **characterized in that** the each of the number of sensor units (11 to 14) of the sensor arrangement has approx. the same visual field angle (5) and that said sensors are to be mounted to supporting structures in the form of masts, racks or towers at a height, adapted to the local conditions, above the meadow area (6) to be worked on.

3. The method of claim 1 or 2, **characterized in that** optical sensors in the infrared and/or optical spectral range, microwave sensors, acoustic sensors, night vision devices, a video panorama camera and/or radar devices, as well as a combination of these sensors and devices can be used as the sensor units (11 to 14).

4. The method of claim 1, **characterized in that** four stationary sensor units (11 to 14) with approx. equal fields of vision of at least 45° are provided in the corner areas outside a roughly rectangular meadow area (6) to be worked on, the approx. equal fields of vision of the sensor units (11 to 14) are oriented such that each of the sensor units covers a respective one of the four edges (6₁ to 6₄) and at least half of the meadow area (6) to be worked on.

5. The method of claim 1, **characterized in that** only one sensor unit of the sensor arrangement, accommodated in a housing (7) and mounted on a supporting structure (8) stationarily set up approx. in the centre of a meadow area (6) to be worked an, is adapted to be rotated about the vertical axis at an adjustable speed.

6. The method of claim 5, **characterized in that** a slot-shaped opening (71) in the housing (7) can be closed with a window permeable to radiation in specific spectral ranges.

7. The method of claim 6, **characterized in that** the window in the slot-shaped housing opening (71) can be divided into segments of different permeability.

8. The method of one of claims 5 to 7, **characterized in that** solar cells are provided on the surface of the housing (7) of the sensor unit, including the housing cover, to generate the energy required for the operation of an electric motor integrated in the housing (7) and the sensor unit.

## Revendications

1. Procédé destiné à détecter et à localiser des animaux se trouvant dans des prairies comme des chevreuils, des chevrotins, des lièvres, **caractérisé en ce que**,
un dispositif de détection se composant d'un nombre de blocs détecteurs (11 à 14) disposés de manière fixe à l'extérieur d'une surface de prairie à traiter (6), dont les coordonnées géographiques sont déterminées à l'aide du Global Monitoring différentiel d'un système DGPM ou du système Galileo et servent de système de référence géographique, permet de détecter sur un laps de temps assez long d'au moins quelques jours des chemins parcourus complètement par des animaux ainsi que leurs lieux de séjours, de les référencer géographiquement à l'aide du système DGPM ou Galileo et de les enregistrer dans un dispositif de traitement de données, **en ce que** le dispositif de traitement des données permet
a) de procéder à une analyse « online » des données reçues ;
b) de déterminer respectivement les lieux de séjour actuels des animaux ainsi que
c) de différencier les espèces d'animaux, et
**en ce que** les lieux de séjour actuels des animaux dans la prairie, avec indication de l'espèce, soient transmis à au moins un appareil de navigation portatif et affichés sur l'écran de celui-ci.

2. Procédé selon la revendication 1, **caractérisé en ce que** le nombre de blocs détecteurs (11 à 14) du dispositif de détection a des angles de champ de vision (5) à peu près de même taille et doit être installé à des hauteurs adaptées aux données locales au-dessus des surfaces de prairies à traiter (6) sur des éléments porteurs sous forme de poteaux, d'échafaudages ou de tours.

3. Procédé selon les revendications 1 ou 2, **caractérisé en ce qu'**on utilise comme blocs détecteurs (11 à 14) des capteurs optiques dans le domaine spectral à infrarouges et/ou optique, des détecteurs de micro-ondes, des détecteurs acoustiques, des appareils de vision nocturne, une caméra vidéo panoramique et/ou des radars ainsi qu'une combinaison de ces détecteurs et appareils.

4. Procédé selon la revendication 1, **caractérisé en ce que** quatre blocs détecteurs fixes (11 à 14) sont prévus avec des champs de vision à peu près de même taille, d'au moins 45° dans la zone des angles en dehors d'une surface de prairie à traiter (6) à peu près rectangulaire, sachant que les champs de vision à peu près de même taille des blocs détecteurs (11 à 14) sont alignés de sorte que chacun des blocs détecteurs respectivement permet de détecter une des quatre lisières (6₁ bis 6₄) et au moins la moitié de la surface de prairie à traiter (6).

5. Procédé selon la revendication 1, **caractérisé en ce que** seulement un bloc détecteur du dispositif de détection inséré dans un boîtier (7) peut pivoter sur un élément porteur (8) fixé à peu près au milieu d'une surface de prairie à traiter (6) autour de l'axe vertical avec une vitesse réglable.

6. Procédé selon la revendication 5, **caractérisé en ce qu'**une ouverture en forme de fente (71) dans le boîtier (7) peut être fermée par une fenêtre laissant passer les rayons dans des domaines spectraux déterminés

7. Procédé selon la revendication 6, **caractérisé en ce que** la fenêtre dans l'ouverture du boîtier en forme de fente (71) peut être divisée en segments de transparence différente.

8. Procédé selon l'une quelconque des revendications 5 à 7, **caractérisé en ce qu'**on prévoit des cellules solaires pour générer l'énergie nécessaire au fonctionnement d'un moteur électrique intégré dans le boîtier (7) et du bloc détecteur, à la surface du boîtier (7) du bloc détecteur y compris du couvercle du boîtier.
